# EUROPEAN PATENT APPLICATION

(11) **EP 4 606 535 A1**
(43) Date of publication of application: **27.08.2025**
(21) Application number: 25157919.9
(22) Date of filing: 14.02.2025
(51) Int. Cl.: B25J 9/16, B25J 9/00

(54) **ROBOT ARRANGEMENT FOR INTERACTING WITH AN OBJECT**

(30) Priority: 23.02.2024 GB 202402610
(71) Applicant: Airbus Operations Limited, Bristol BS34 7PA (GB); Cranfield University, Cranfield, Bedfordshire MK43 0AL (GB)
(72) Inventor: WEBB, Philip, Cranfield, MK43 0AL (GB); ASIF, Seemal, Cranfield, MK43 0AL (GB); LIAQAT, Amer, Bristol, BS34 7PA (GB); HOOSON, Aled, Bristol, BS34 7PA (GB)
(74) Representative: Worthington, Richard Easton

(57) **Abstract**

A robot arrangement for interacting with an object, comprising: a plurality of robots adjacent an object; the plurality of robots configured to interact with the object sequentially such that: a first robot of the plurality of robots is configured to perform a first portion of a first task on the object and then, whilst the first robot is not interacting with the object, a second robot of the plurality of robots is configured to perform a second portion of the first task on the object, and the plurality of robots are configured to simultaneously interact with the object, before or after completion of the first task, so as to collectively perform a second task on the object.

## Description

### FIELD OF THE INVENTION

The present invention relates to a robot arrangement for interacting with an object, a robot arrangement for imaging an object, a method of interacting with an object, and a method of imaging an object.

### BACKGROUND OF THE INVENTION

The assembly of large structures, such as aircraft components, typically involves the operations of several robots at various stages of the assembly process. This can be particularly challenging when the robots must work collectively on the same component. It is desirable to identify strategies to reduce the processing power required to undertake these processes, more efficiently utilise the robots, and increase the overall speed of the assembly process.

### SUMMARY OF THE INVENTION

A first aspect of the invention provides a robot arrangement for interacting with an object, comprising: a plurality of robots adjacent an object; the plurality of robots configured to interact with the object sequentially such that: a first robot of the plurality of robots is configured to perform a first portion of a first task on the object and then, whilst the first robot is not interacting with the object, a second robot of the plurality of robots is configured to perform a second portion of the first task on the object, and the first robot and the second robot are configured to simultaneously interact with the object, before or after completion of the first task, so as to collectively perform a second task on the object.

The perceived disadvantages of separating tasks sequentially can have several unexpected advantages. For example, the overall processing power to monitor the robots and the object can be reduced, which can in turn reduce the costs of equipment otherwise required. The reduction in processing power can also ultimately reduce the overall time to complete the task due to the speed of processing the various steps due to the reduced complexity of the tasks.

The first task may comprise preparation of the object for lifting towards an assembly position. The lifting of objects, particularly large objects lifted by robots, can be challenging due to the interaction of multiple robots, and the complex monitoring systems to avoid clashes with the surrounding environment.

The object may be a first object, and the robot arrangement may be further configured for interacting with a second object, and the second task may comprise lifting the first object into an assembly position ready for joining to the second object. Assembly is a particular application that requires careful and considered placement of two objects relative to each other. Increased efficiency, and costs savings, can be particularly advantageous in this scenario.

The plurality of robots may each have an end effector, and the first and second portions of the first task may each comprise the respective effector carrying a device that interacts with the object, such that: the first robot is configured to carry the device to perform the first portion of the first task and then pass the device to the second robot, and the second robot is configured to carry the same device to perform the second portion of the first task.

In this manner, only a single device is required to perform the first task. This can reduce costs and simplify the overall operation of the robots.

The robot arrangement may comprise, during the first task, the first robot configured to pass the device to the second robot by placing the device on a mounting point and the second robot is configured to carry the device from the mounting point.

The mounting point can provide a convenient way in which the robots can pass the device between themselves. The mounting point can be specifically designed for securing the device when placed on the mounting point and releasing the device when the robot requires it. This reduces any modifications that might otherwise be required of the end effectors and can reduce the possibly of the device being dropped as the device is passed between the robots.

The device may be an image capture device configured to capture images of respective first and second sections of the object sequentially.

The processing of images, for example for locating and positioning an object, can be processing intensive. The processing can be further complicated when multiple image capture devices are used simultaneously due to the meshing of the respective images at different parts of the object. If a single image capture device is used, the calibration of only a single device is required.

The device may be part of an imaging system, the imaging system further comprising a tracker configured to determine a position of the device. To track the device accurately and efficiently, the tracker may monitor only a single device during a task. The use of a single device thereby reduces the expense of additional trackers that would otherwise be required. In tracking an image capture device, the tracker can help accurately map out the object from the captured images.

The object may be secured to a jig, the jig comprising a plurality of end effector connectors, each end effector connector configured to couple to an end effector of a respective one of the plurality of robots for manipulating the object. This can provide a suitable rigid structure that can securely hold the object.

The jig may comprise the mounting point. In this manner, the mounting points can be rigidly positioned relative to the object without needing to directly attach to the object.

A set of reflectors may be attached to the jig for interacting with a tracker device to determine a position of the jig. The reflectors can help to guide the jig accurately (e.g. during the second task). The tracker device may be the same tracker forming part of the imaging system.

A second aspect of the invention provides a robot arrangement for imaging an object, comprising: a plurality of robots each having an end effector; and an imaging system comprising an image capture device configured to capture images of an object; wherein the plurality of robots is configured to sequentially carry the image capture device, and the imaging system is configured to operate the image capture device to capture images of respective portions of the object such that: a first robot of the plurality of robots is configured to carry the image capture device by its end effector and to capture images of a first section of the object and pass the image capture device to a second robot of the plurality of robots that is configured to carry the image capture device by its end effector to capture images of a second section of the object.

With this arrangement, the complexity of processing all the images can be reduced. Processing power can be reduced, and the need to calibrate the relative positions of the image capture device s relative to one another is mitigated. Only the position of one image capture device is required.

The imaging system may comprise a tracker device configured to track a position of the image capture device during sequential operation of the image capture device carried by the robots. By using a single image capture device, only a single tracker is required. The use of a single device thereby reduces the expense of additional trackers that would otherwise be required. The tracker helps to correlate the captured images with their location so as to more accurately monitor the object.

The first robot may be configured to pass the image capture device to the second robot by placing the device on a mounting point and the second robot may be configured to carry the device from the mounting point. The robot arrangement may comprise a plurality of mounting points.

The mounting points provide a convenient way in which the robots can pass the device between themselves. The mounting points can be specifically designed for securing the device when placed on the mounting point and releasing the device when the robot requires it. This reduces any modifications that might otherwise be required of the robot end effectors configured to carry the image capture devices and can reduce the possibly of the image capture device being dropped as the device is passed between the robots.

The object may be secured to a jig, and the mounting point may be attached to a frame of the jig. The jig can provide a suitable rigid structure that can securely hold the object, whilst the mounting points can be rigidly positioned relative to the object without needing to directly attach to the object.

The plurality of robots may comprise a third robot. The advantages of separating out the various tasks performed by the robots can thereby be increased. For instance, the third robot of the plurality of robots can be configured to perform a third portion of the first task on the object. The second (or first) robot can be configured to pass the image capture device to the third robot of the plurality of robots, wherein the third robot is configured to carry the image capture device to capture images of a third section of the object. The third robot can be configured to pick up the device from a mounting point in which the first or second robot has placed the device.

The object may be an aircraft component. The object may be an aircraft wing component. The positioning and assembly of aircraft components can often require high tolerances, and often the components are large components requiring complex and extensive monitoring.

The aircraft component may be a leading edge structure of an aircraft wing and/or the second object may be a wingbox of an aircraft wing. Leading edge structures are generally large, elongate structures with relatively flexible and sensitive surfaces that require careful monitoring and manoeuvring.

A further aspect of the invention provides a method of interacting with an object, wherein there is provided a plurality of robots adjacent the object, the method comprising: operating a first robot of the plurality of robots to perform a first portion of a first task on the object, and operating a second robot of the plurality of robots, whilst the first robot is not interacting with the object, to perform a second portion of the first task on the object, and operating the plurality of robots to simultaneously interact with the object, before or after completion of the first task, so as to collectively perform a second task on the object.

The second task may comprise lifting the first object into an assembly position ready for joining to a second object.

The method may comprise: operating a third robot of the plurality of robots, whilst the first and second robots are not interacting with the object, to perform a third portion of the first task on the object.

The first portion of the first task may comprise carrying an image capture device and operating the image capture device to capture images of a first section of the object and passing the image capture device to the second robot, and the second portion of the first task may comprise carrying the image capture device and operating the image capture device to capture images of a second section of the object, optionally the second portion of the first task comprises passing the image capture device to the third robot, and the third portion of the first task comprises carrying the image capture device and operating the image capture device to capture images of a third section of the object

A yet further aspect of the invention provides a method of imaging an object, wherein there is provided a plurality of robots each having an end effector, and an imaging system comprising an image capture device, the method comprising: operating a first robot of the plurality of robots to carry the image capture device by its end effector and operating the image capture device to capture images of a first section of the object, passing the image capture device to a second robot of the plurality of robots, and operating the second robot to carry the image capture device by its end effector and operating the image capture device to capture images of a second section of the object.

The method may comprise: passing the image capture device to a third robot of the plurality of robots, and operating the third robot to carry the image capture device by its end effector and operating the image capture device to capture images of a third section of the object

A mounting point may be provided for mounting the image capture device, the method comprising: operating the first robot to place the image capture device on a mounting point, and operating the second robot to pick up the device from the mounting point.

The mounting point may be attached to a frame of a jig.

### BRIEF DESCRIPTION OF THE DRAWINGS

Embodiments of the invention will now be described with reference to the accompanying drawings, in which:
Figure 1 shows an aircraft;
Figure 2 shows a robot for assembling parts of the aircraft;
Figure 3 shows a leading edge structure secured to a jig for assembling to a fixed structure;
Figure 4 shows a first robot moving a scanner to capture images of a portion of the leading edge structure;
Figure 5 shows the scanner placed on a mounting point attached to the jig;
Figure 6 shows a second robot moving the scanner to capture images of a second portion of the leading edge structure;
Figure 7 shows the leading edge structure attached to two robots for lifting the leading edge structure;
Figure 8 shows the leading edge structure lifted by the robots in preparation for assembly;
Figure 9 shows the leading edge structure approaching the assembly position adjacent the fixed structure;
Figure 10 shows the leading edge structure in the assembly position adjacent the fixed structure;
Figure 11 shows a temporary fastener inserted into a fastener hole for temporarily securing the leading edge structure to the fixed structure;
Figure 12 shows the leading edge structure temporarily secured to the fixed structure;
Figure 13 shows a drilling module on the robot for drilling a fastener hole;
Figure 14 shows a fastener module on the robot for inserting a fastener into the fastener hole;
Figure 15 shows three robots arranged adjacent the leading edge structure for performing the assembly operations.

### DETAILED DESCRIPTION OF EMBODIMENT(S)

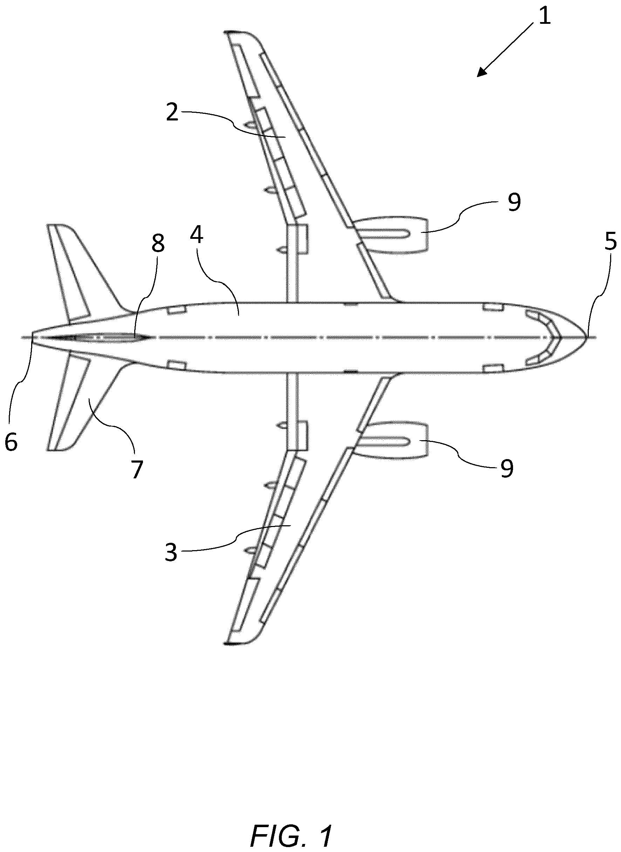

Figure 1 illustrates a typical fixed wing aircraft 1 having a port wing 2 and starboard wing 3 carrying wing mounted engines 9, the wings 2, 3 extending from a fuselage 4. The fuselage has a nose 5 and a tail 6 with horizontal and vertical stabiliser surfaces 7, 8 near the tail 6. The aircraft 1 is a typical jet passenger transonic transport aircraft but the invention is applicable to a wide variety of fixed wing aircraft types, including commercial, military, passenger, cargo, jet, propeller, general aviation, etc. with any number of engines attached to the wings or fuselage.

The assembly of aircraft 1 involves the assembly of a huge number of components that are fitted to relatively high tolerances. The integration of robots into the aircraft assembly process has steadily increased over time due in part to the high speed and accuracy achievable with robotic systems, as well as the ability to automate processes. Yet the processes involved can still be time consuming and require constant calibration to avoid robot drift resulting from accumulated errors in the estimated position and orientation of the robot, as well as ensuring an accurate understanding of the components the robot will operate on.

These processes can be further complicated by the interactions of multiple robots, particularly autonomous robots that can operate independently of each other and the surrounding environment.

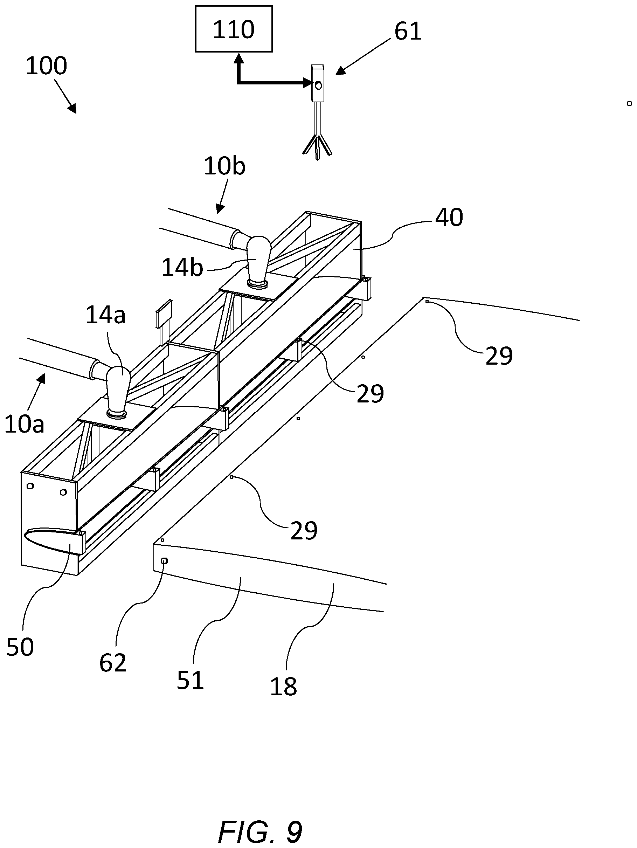

This invention will be discussed in regard to the automated assembly of a wing, and specifically the joining of a leading edge structure 50 of the wing 2, 3 to a wingbox 18 of the wing 2, 3 (See figure 9), although it will be appreciated that the invention is applicable to the assembly of a wide range of objects.

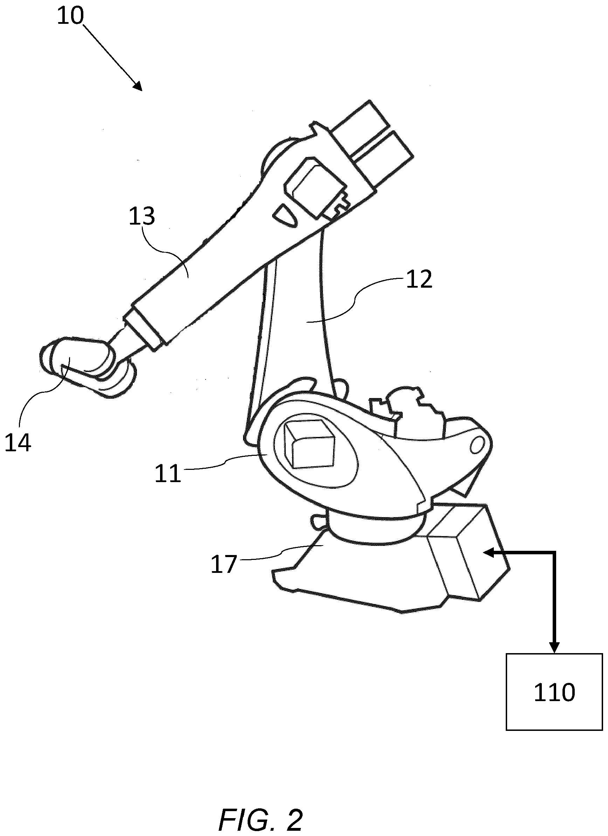

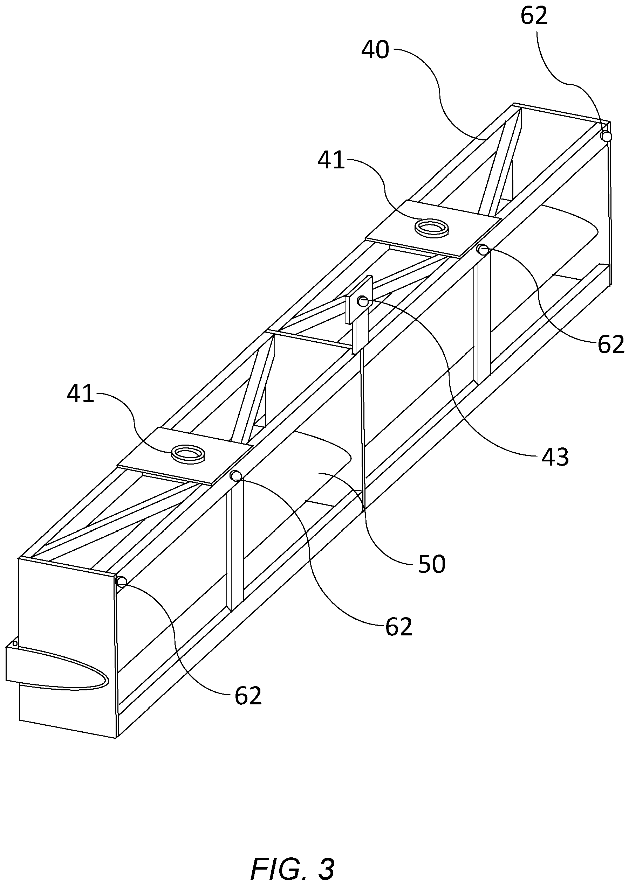

Figure 2 shows an example of a robot 10. The robot 10 may be an autonomous robot configured to operate independently based on its environment and without constant human interaction or rigidly pre-programmed operations. The robot 10 includes a first arm 12 rotatably attached to a rotatable base unit 11 that sits on a rigid base 17, and a second arm 13 rotatably attached to the first arm 12. At the end of the second arm 13 is an end effector 14 configured to attach to an end effector connector 41 (See figure 3).

The robot 10 forms part of a robot arrangement 100 controlled by a control system 110, as will be further described below.

Figure 3 shows the leading edge structure 50 of an aircraft wing 2, 3 that is to be attached to a fixed structure 51 of the wing 2, 3 (See figure 9), such as a spar or other part of the wingbox 18. In the present context, 'fixed' refers to the structure not moving relative to its support base, such as ground. The leading edge structure 50 is an elongate and flexible structure, having a length several times greater than its width (for example at least three times greater than its width). To assemble the leading edge structure 50 against the fixture structure 51, the leading edge structure 50 can be secured to a jig 40, such as that shown in the figures.

The jig 40 is a rigid structure, comparative to the leading edge structure 50, and substantially prevents flexing of the leading edge structure 50 as well as protecting the leading edge structure 50, e.g. during movement. The assembly process typically requires high tolerances to be maintained. The rigid securement of the leading edge structure 50 to the jig 40 helps to maintain the shape of the leading edge structure 50 during the assembly process to improve its fitment to the fixed structure 51.

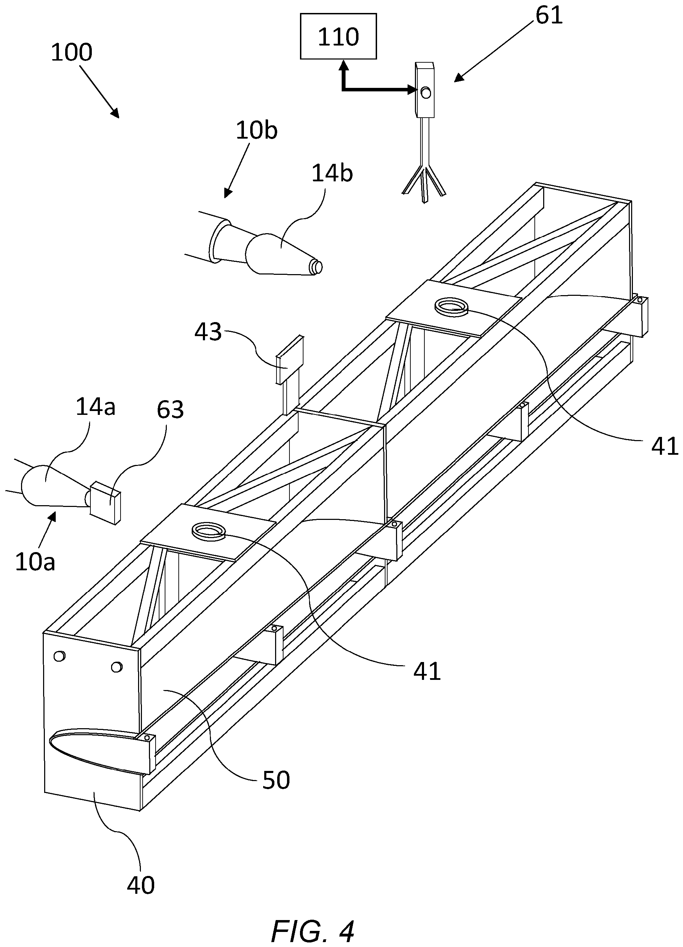

The jig 40 can provide a suitable frame to which several components of the robot arrangement 100 can be attached. As shown in figure 3, the jig 40 includes end effector connectors 41 for attaching to the end effectors 14 of a robot 10. Several components of an imaging system may be attached to the jig 40, for instance a set of reflectors 62, e.g. a plurality of spherically mounted retroreflectors (SMR) for use with a laser tracker, may be spaced across the jig 40. A tracker 61 of the imaging system, such as that shown in figure 4, can use the reflectors 62 as targets for determining the position of the jig 40.

The jig 40 may also include one or more mounting points 43 onto which equipment can be temporarily mounted, such as a laser scanner, as will be discussed further in relation to figures 4 to 6.

A method of imaging the leading edge structure 50 in accordance with an example of the invention will now be described.

As shown in figure 4, the robot arrangement 100 includes two end effectors 14a, 14b attached to respective robots 10a, 10b. The robots 10a, 10b connect to the control system 110. The robots 10a, 10b are each positioned adj acent the leading edge structure 50 so as to be able to interact with the leading edge structure 50.

The robot 10a of the first end effector 14a is manoeuvred into a position to pick up and carry an image capture device 63 of the imaging system, such as the aforementioned laser scanner. The first end effector 14a carries the image capture device 63 and moves it across the leading edge structure 50 to capture images of a first section of the leading edge structure 50. In doing so, the image capture device 63 is able to produce a composite image of the leading edge structure 50 that overlays multiple images spanning across the first section of the leading edge structure 50.

A tracker 61 is arranged in line-of-sight with the image capture device 63 to determine the position of the image capture device 63 itself. In this manner, the relative position of each of the captured images can be more accurately and reliably determined.

Due to the finite length of the robot arms 12, 13, and the elongate size of the leading edge structure 50, a single robot 10 may be unable to move the image capture device 63 to scan images across the entire leading edge structure 50.

To address this issue, the first robot 10a passes the image capture device 63 to the second robot 10b. The second robot 10b is positioned adjacent a second section of the leading edge structure 50. The second end effector 14b collects the image capture device 63 and moves it across the leading edge structure 50 to capture images of a second section of the leading edge structure 50 that is not the first section, although it will be appreciated there may be some overlap between the first and second sections of the leading edge structure 50.

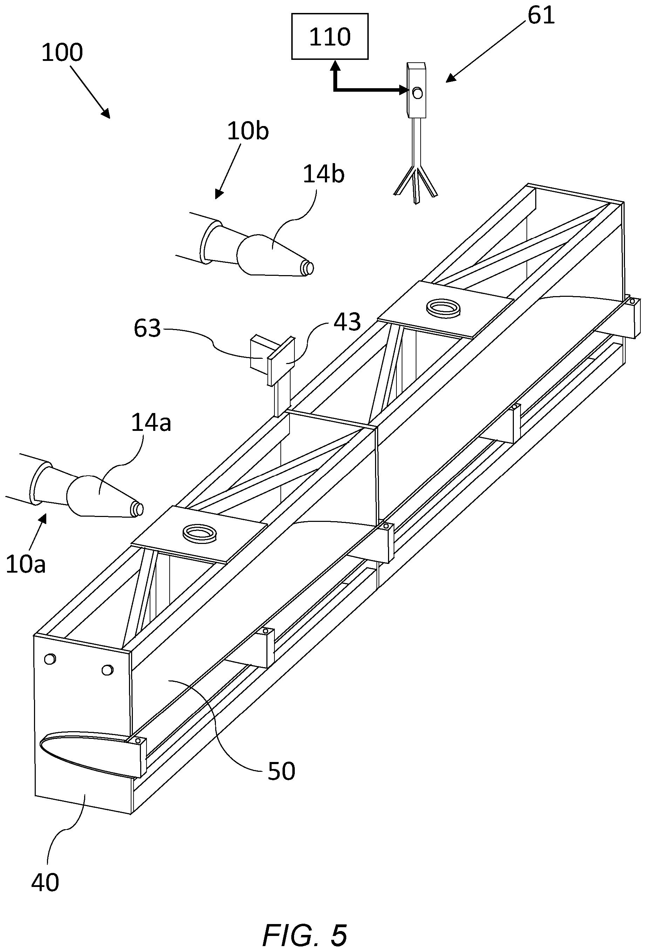

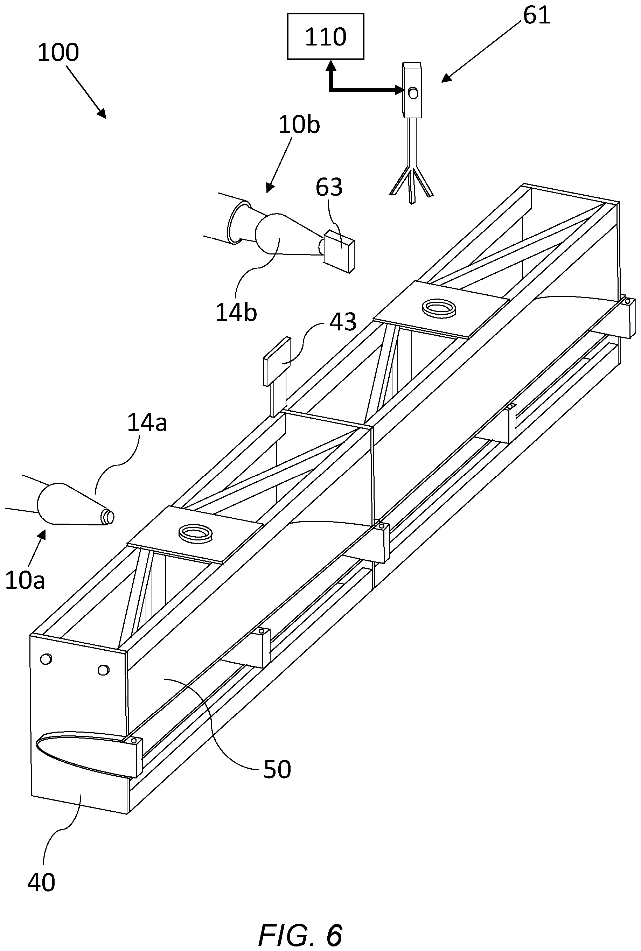

The image capture device 63 may be passed directly between the robots 10a, 10b, such that the first end effector 14a passes the image capture device 63 to the second effector 14b and then releases its connection to the image capture device 63. In an alternative example, as shown in figure 5, the first robot 10a places the image capture device 63 on a mounting point 43 (See figure 5). The second robot 10b is then able to manoeuvre towards the mounting point 43 and pick up the image capture device 63 from the mounting point 43 (See figure 6). The advantage of this approach is that a specialist mounting point 43 can be designed that is specially designed to accommodate transfer of the image capture device 63, thereby minimising the risks of the robots 10a, 10b clashing or dropping the image capture device 63.

In the period of time when one of the robots 10a, 10b is carrying the image capture device 63, the other robot(s) 10a, 10b may be placed in standby. Alternatively, the other robot 10a, 10b may perform a different task within the working environment, either on the leading edge structure 50 or elsewhere in the surrounding environment.

The tracker 61 maintains line-of-sight with the image capture device 63 such that the position of the image capture device 63 can be correlated to the positions of the image capture device 63 when it was attached to the first end effector 14a. Accordingly, the image capture device 63 is able to produce a composite image of both the first and second sections of the leading edge structure 50 by stitching the images together.

An advantage of sequentially capturing images using a single image capture device 63, rather than providing an image capture device 63 for each robot 10a, 10b, is the simplification of the overall process of cross-correlating and combining the images. Whilst the operating time to perform the imaging task across the leading edge structure 50 may be decreased, the increased burden in correlating the images from separate image capture devices 63 is disproportionately increased. There are also considerable cost savings due to the relatively high cost of the image capture device, particularly in the case of a laser scanner, and the separate tracker 61 that would be required to track each image capture device 63.

It will be appreciated that the sequential interaction with the object described above may have advantages in various other applications, potentially resulting in similar advantages in terms of overall processing and equipment costs. For instance, a coordinate measuring machine (CMM) for measuring points on the leading edge structure 50 or a tool module for operating on the leading edge structure 50 may be passed sequentially between the robots 10a, 10b.

In some examples, in addition to capturing images of the leading edge structure 50, the imaging system may also capture images of the fixed structure 51. In this way, detailed images of both structures can be determined for improving relative positioning of the structures.

Whilst the previous examples have focussed on the interaction with the leading edge structure 50 and/or fixed structure 51 of an aircraft 1, the object may be another component of an aircraft 1, or from another industry entirely, such as the automotive industry.

As previously discussed, the jig 40 provides several advantages in that accessories can easily be attached to the frame of the jig 40 without requiring any direct modification or interference with the object. This can allow a common jig 40, and its associated fixings, to be used with several objects along a manufacturing line.

The sequential interaction may form part of a first task, such that the first robot 10a performs a first portion of the first task on the object and then the second robot 10b performs a second portion of the first task on the object.

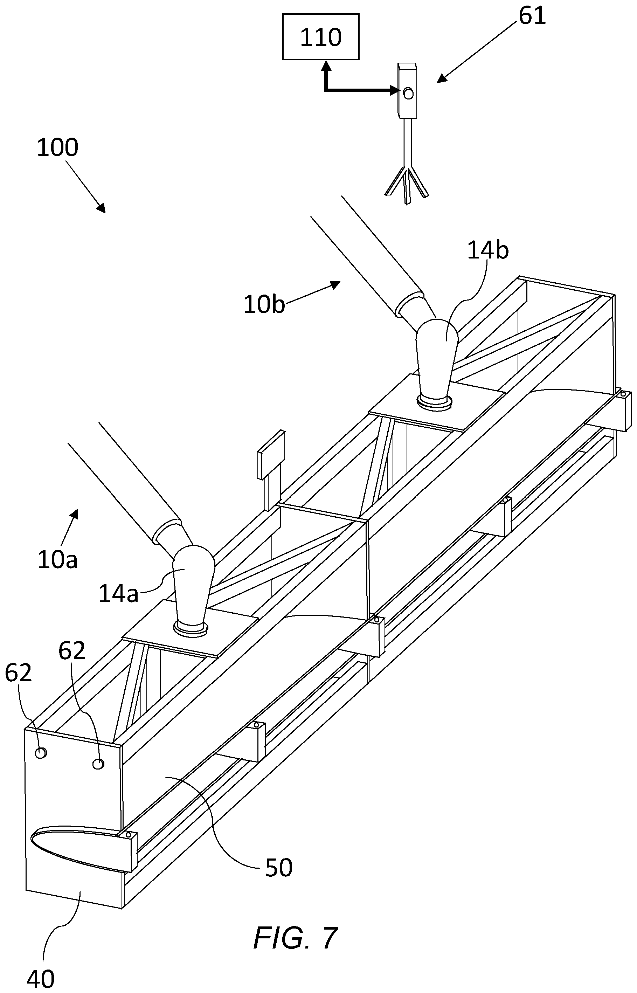

A second task of the robots 10a, 10b that follows the first task will now be described with reference to figures 7 to 10.

In contrast to the sequential interaction of the robots 10a, 10b during the first task, the robots 10a, 10b are manoeuvred simultaneously in the second task so as to collectively perform the second task on the object.

In the present example, the second task comprises the robots operating simultaneously to lift the leading edge structure 50 into an assembly position for it to be assembled to a fixed structure 51 of the wing 2, 3. In order to achieve this, the end effectors 14a, 14b are each connected to a respective end effector connector 41, such as shown in figure 7. The end effector connectors 41 are shown as attached to the jig 40 in the present examples, although the end effector connectors 41 may be attached to the leading edge structure 51 itself in some examples.

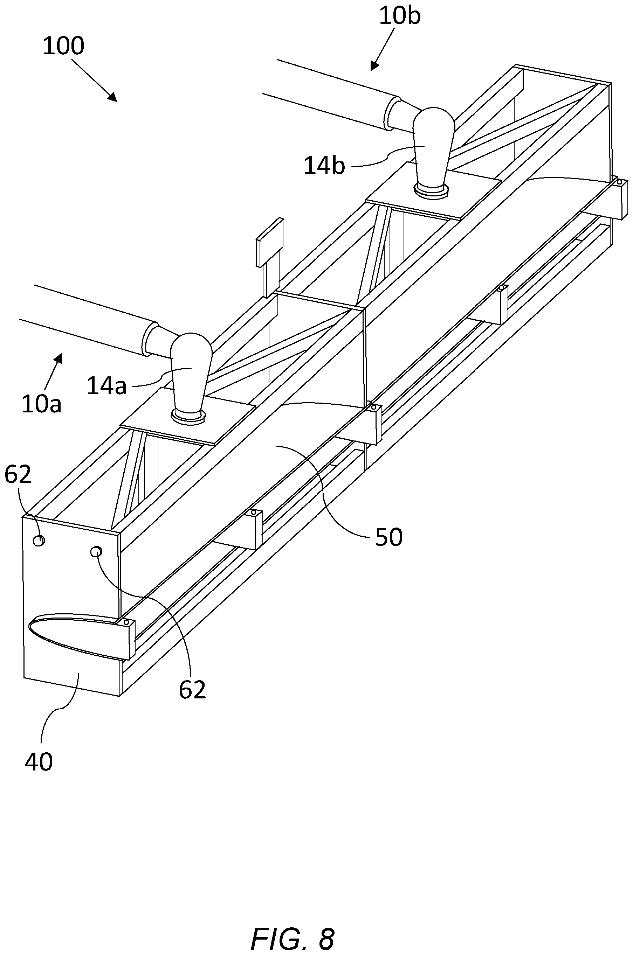

The leading edge structure 50 is lifted by the robots 10a, 10b from a ground position (Figure 7) into an elevated position (Figure 8) and then moved towards an assembly position adjacent the fixed structure 51 (Figure 9). To guide the robots 10a, 10b, a set of reflectors 62 are fixed on the jig 40 and fixed structure 51, and thereby are fixed relative to the leading edge structure 50. The reflectors 62, which may be a spherically mounted retroreflector (SMR) or similar device, operate in combination with the tracker 61 to inform the control system 110 regarding the position of the leading edge structure 50. In a similar manner to the image capture device 63, the reflectors 62 are arranged to maintain line-of-sight with the tracker 61.

In this manner, it will be appreciated that each of the robots 10a, 10b, tracker 61, reflectors 62 and image capture device 63 may all connect to the control system 110 for controlling the movement of the robots 10a, 10b, or in the case of autonomous robots, feeding the robots 10a, 10b with information required to instruct its movement.

In the case of both the reflectors 62 and image capture device 63 it will be understood that the line-of-sight with the tracker 61 may be temporarily blocked during operation, e.g. by an arm 12, 13 of a robot 10, 10a, 10b during movement, but that the tracker 61 is able to resume tracking the reflectors 62 and image capture device 63 once the obstruction is cleared. It will further be understood that the tracker 61 may be able to track only a single device at one time, such that the tracker 61 needs to, e.g., track a first reflector 62 and then subsequently a second reflector 62, and then later the first reflector 62 again, with this cycle repeating so as to continually track the reflectors 62 during movement.

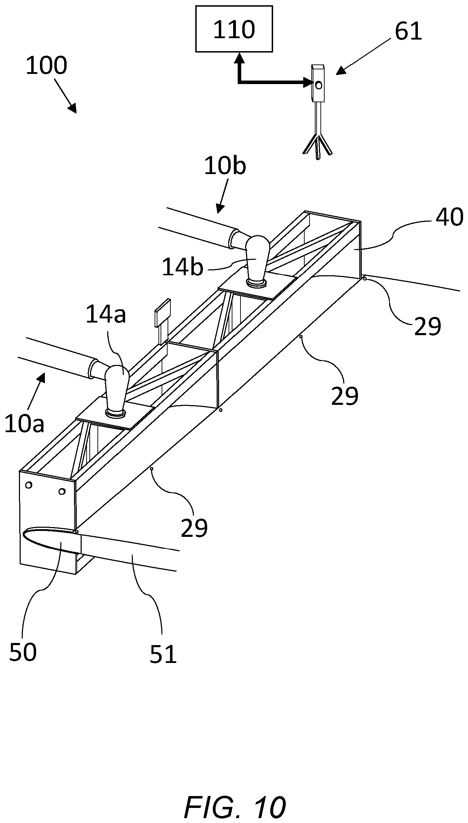

The assembly of many components, particularly aircraft components as in the present example, often requires adherence to relatively high tolerances. The accurate positioning of the components to be assembled is therefore critical to achieving this. As explained previously, the image capture device 63 first captures images for the development of a detailed composite image of the leading edge structure 50 to be developed prior to moving the leading edge structure 50. The image capture device 63 may also capture images of the fixed structure 51. Upon developing this image, the reflectors 62 are able to indicate the overall position of the leading edge structure 50 in relation to the fixed structure 51 during transportation, which can be cross referenced to the information gathered by the image capture device 63 to determine the spatial position of all scanned parts of the leading edge structure 50. This facilitates accurate locating of the leading edge structure 50 into the assembly position (See figure 10). For example, fastening points on the leading edge structure 50 may be aligned with corresponding fastening points on the fixed structure 51.

The robots 10a, 10b may be further operated to fasten the leading edge structure 50 to the fixed structure 51. The jig 40 can also reduce access to the leading edge structure 50 and fixed structure 51 during subsequent attachment.

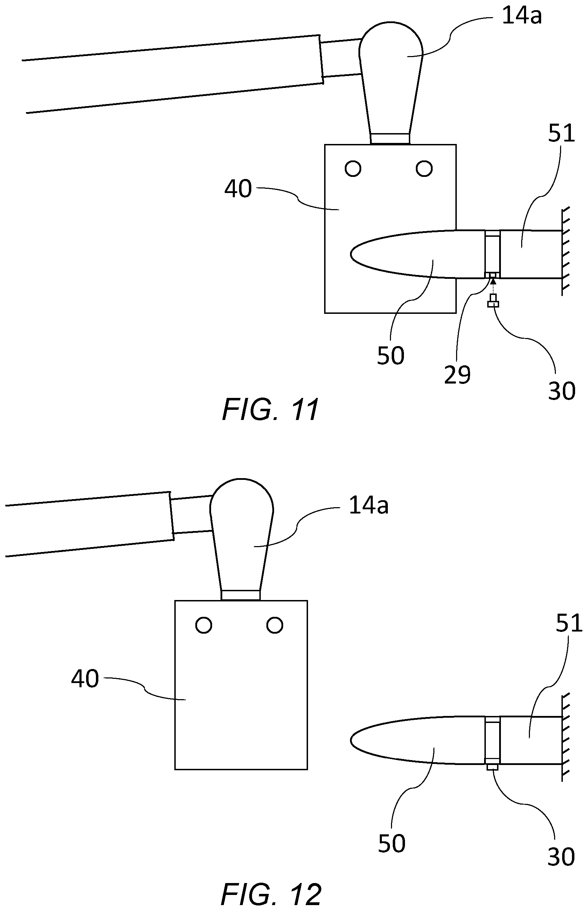

Accordingly, the leading edge structure 50 and fixed structure 51 may each comprise respective sets of fastening holes 29 that are aligned with each other in the assembly position, such that a fastener hole 29 of the leading edge structure 50 has a corresponding fastener hole 29 of the fixed structure 51 with which it aligns when the leading edge structure is in the assembly position. An example of this arrangement is shown in figure 11. A set of temporary fasteners 30 can be placed into the fastener holes 29 to fix the structures 50, 51 together. The jig 40 can then be detached from the leading edge structure 50, and the robots 10a, 10b withdrawn, whilst the leading edge structure 50 remains in the assembly position (See figure 12).

The fastening holes 29 may function as fastening points that are imaged and tracked by the imaging system. Alternatively, or in addition, the position of the fastening points may be determined based on other features, such as one or more edges of the structures 50, 51.

In the present example, the leading edge structure 50 and fixed structure 51 are each shown to comprise five fastener holes- see figures 4 to 10 (only some of which are labelled), although each structure 50, 51 may comprise many more pre-drilled fastener holes 29, such as thirty or more pre-drilled fastener holes 29.

Typically, the number of pre-drilled fastener holes 29 will be determined based on a compromise between ensuring the leading edge structure 50 is fixedly secured to the fixed structure 51 and reducing the burden in aligning respective fastener holes 29. High tolerances are required to ensure the fastener holes 29 on the leading edge structure 50 and fixed structure 51 are in good alignment during movement to the assembly position, and the burden of achieving that tolerance level increases rapidly with each additional fastener hole 29 that requires alignment.

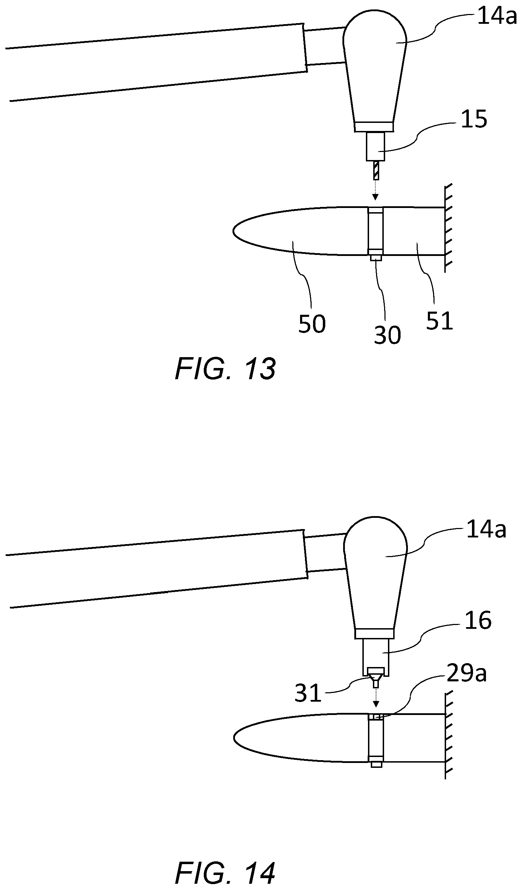

This burden can be greatly reduced by minimising the number of pre-drilled fastener holes 29, and subsequently drilling additional fastener holes 29a through abutting surfaces of the leading edge structure 51 and fixed structure 51 when in the assembly position. There may be many more additional fastener holes 29a than pre-drilled fastener holes 29, such as one hundred or more. Concurrent drilling of the abutting surfaces to form the additional fastener holes 29a ensures alignment of the drilled holes. This operation may be performed using the robots 10a, 10b, which are now detached from the jig 40. As shown in figure 13, a drilling module 15 may be attached to the end effector 14a, 14b of a robot 10a, 10b to perform the drilling operation.

Upon drilling the additional fastener holes 29a, and prior to removal of the temporary fasteners 30, a set of permanent fasteners 31 are inserted into the additional fastener holes 29a (See figure 14). In the present context, a permanent fastener 31 is any fastener intended to remain on an assembly during service, although the permanent fastener 31 may be removable, for example during service and maintenance inspections.

At this point, the temporary fasteners 30 can be removed and replaced by permanent fasteners 31.

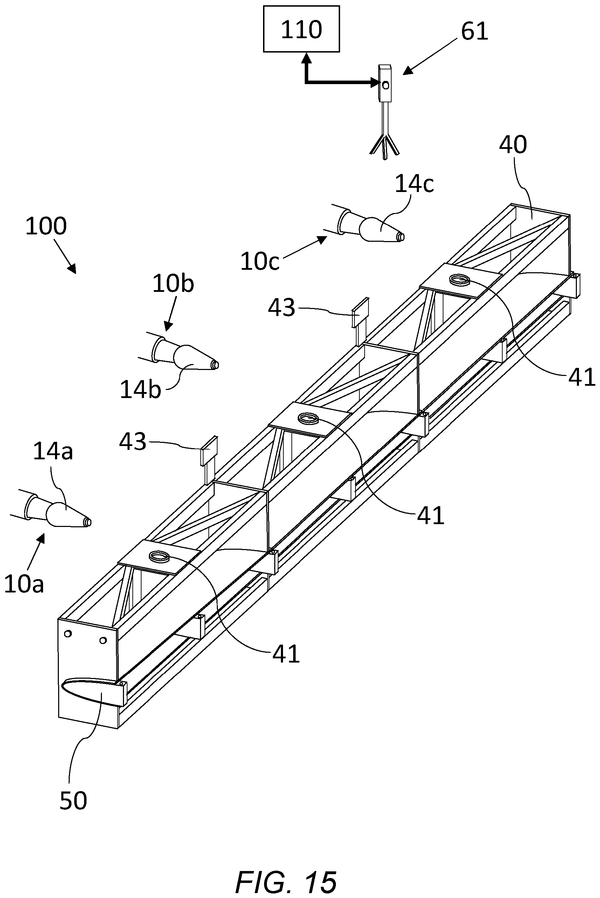

The invention has thus far been discussed in relation to the sequential and simultaneous operation of two robots 10a, 10b, however it will be appreciated that the advantages of the invention may be further apparent when more than two robots 10a, 10b are operated simultaneously and/or sequentially. For instance, figure 15 shows a leading edge structure 50 arranged to be lifted by first, second and third robots 10a, 10b, 10c each having first, second and third end effectors 14a, 14b, 14c. In such examples, the robot arrangement 100 may include two or more mounting points 43 to facilitate passing of the image capture device 63.

Where the word 'or' appears this is to be construed to mean 'and/or' such that items referred to are not necessarily mutually exclusive and may be used in any appropriate combination.

Although the invention has been described above with reference to one or more preferred embodiments, it will be appreciated that various changes or modifications may be made without departing from the scope of the invention as defined in the appended claims.

## Claims

1. A robot arrangement for interacting with an object, comprising:
a plurality of robots adjacent an object;
the plurality of robots configured to interact with the object sequentially such that:
a first robot of the plurality of robots is configured to perform a first portion of a first task on the object and then, whilst the first robot is not interacting with the object,
a second robot of the plurality of robots is configured to perform a second portion of the first task on the object, and
the first robot and the second robot are configured to simultaneously interact with the object, before or after completion of the first task, so as to collectively perform a second task on the object.

2. The robot arrangement of claim 1, wherein the first task comprises preparation of the object for lifting towards an assembly position, and/or wherein the object is a first object, the robot arrangement is further for interacting with a second object, and the second task comprises lifting the first object into an assembly position ready for joining to the second object.

3. The robot arrangement of any preceding claim, wherein the plurality of robots each have an end effector, and the first and second portions of the first task each comprise the respective effector carrying a device that interacts with the object, such that:
the first robot is configured to carry the device to perform the first portion of the first task and pass the device to the second robot, and
the second robot is configured to carry the same device to perform the second portion of the first task, optionally wherein, during the first task, the first robot is configured to pass the device to the second robot by placing the device on a mounting point and the second robot is configured to carry the device from the mounting point.

4. The robot arrangement of claim 3, wherein the device is an image capture device configured to capture images of respective first and second sections of the object sequentially.

5. The robot arrangement of any one of claims 3 to 4 in combination with an imaging system, wherein the device is part of the imaging system, the imaging system further comprising a tracker configured to determine a position of the device.

6. The robot arrangement of any preceding claim in combination with a jig, wherein the object is secured to the jig, the jig comprising a plurality of end effector connectors, each end effector connector configured to couple to an end effector of a respective one of the plurality of robots for manipulating the object.

7. The robot arrangement and jig of claim 6 when dependent on claim 3, wherein the jig comprises the mounting point, optionally wherein a set of reflectors are attached to the jig for interacting with a tracker device to determine a position of the jig, preferably wherein the tracker device is the tracker forming part of the imaging system of claim 5.

8. A robot arrangement with an imaging system for imaging an object, comprising:
a plurality of robots each having an end effector; and
an imaging system comprising an image capture device configured to capture images of an object;
wherein the plurality of robots is configured to sequentially carry the image capture device, and the imaging system is configured to operate the image capture device to capture images of respective portions of the object such that:
a first robot of the plurality of robots is configured to carry the image capture device by its end effector and to capture images of a first section of the object and pass the image capture device to a second robot of the plurality of robots that is configured to carry the image capture device by its end effector to capture images of a second section of the object.

9. The robot arrangement of claim 8, wherein the imaging system comprises a tracker device configured to track a position of the image capture device during sequential operation of the image capture device carried by the robots and/or wherein the first robot is configured to pass the image capture device to the second robot by placing the image capture device on a mounting point and the second robot is configured to carry the image capture device from the mounting point.

10. The robot arrangement of claim 9 in combination with a jig, wherein the object is secured to a jig, and the mounting point is attached to a frame of the jig.

11. The robot arrangement of any preceding claim, wherein the plurality of robots comprises a third robot, and/or wherein the object is an aircraft component, optionally an aircraft wing component, and/or wherein the aircraft component is a leading edge structure of an aircraft wing and/or the second object is a wingbox of an aircraft wing.

12. A method of interacting with an object, wherein there is provided a plurality of robots adjacent the object, the method comprising:
operating a first robot of the plurality of robots to perform a first portion of a first task on the object, and
operating a second robot of the plurality of robots, whilst the first robot is not interacting with the object, to perform a second portion of the first task on the object, and
operating the plurality of robots to simultaneously interact with the object, before or after completion of the first task, so as to collectively perform a second task on the object.

13. The method of claim 12, wherein the second task comprises lifting the first object into an assembly position ready for joining to a second object, and/or wherein the method comprises:
operating a third robot of the plurality of robots, whilst the first and second robots are not interacting with the object, to perform a third portion of the first task on the object, and/or wherein the first portion of the first task comprises carrying an image capture device and operating the image capture device to capture images of a first section of the object and passing the image capture device to the second robot, and the second portion of the first task comprises carrying the image capture device and operating the image capture device to capture images of a second section of the object, optionally wherein the second portion of the first task comprises passing the image capture device to the third robot, and further optionally the third portion of the first task comprises carrying the image capture device and operating the image capture device to capture images of a third section of the object

14. A method of imaging an object, wherein there is provided a plurality of robots each having an end effector, and an imaging system comprising an image capture device, the method comprising:
operating a first robot of the plurality of robots to carry the image capture device by its end effector and operating the image capture device to capture images of a first section of the object,
passing the image capture device to a second robot of the plurality of robots, and
operating the second robot to carry the image capture device by its end effector and
operating the image capture device to capture images of a second section of the object.

15. The method of claim 14, the method comprising:
passing the image capture device to a third robot of the plurality of robots, and
operating the third robot to carry the image capture device by its end effector and
operating the image capture device to capture images of a third section of the object and/or wherein there is provided a mounting point for mounting the image capture device, the method comprising: operating the first robot to place the image capture device on the mounting point, and operating the second robot to pick up the image capture device from the mounting point, optionally wherein the mounting point is attached to a frame of a jig.
